# EUROPÄISCHE PATENTSCHRIFT

(11) **EP 1 375 868 B1**
(45) Veröffentlichungstag und Bekanntmachung des Hinweises auf die Patenterteilung: **02.01.2008**
(21) Anmeldenummer: 02014242.8
(22) Anmeldetag: 26.06.2002
(51) Int. Cl.: F02D 9/06, F02D 23/02, F02B 37/007, F02B 37/013, F02B 29/04

(54) **Motorbremseinrichtung für eine turboaufgeladene Brennkraftmaschine**
Engine brake apparatus for a turbocharged IC engine
Dispositif à frein moteur pour un moteur à combustion interne à suralimentation par turbosoufflante

(43) Veröffentlichungstag der Anmeldung: 02.01.2004
(73) Patentinhaber: BorgWarner Inc., Auburn Hills, MI 48326 (US)
(72) Erfinder: Klingel, Dieter, 67281 Kirchheim (DE)
(74) Vertreter: Patentanwälte Westphal, Mussgnug & Partner

(56) Entgegenhaltungen:
- EP-A- 0 864 737
- DE-A- 4 024 572
- DE-A- 19 837 978
- DE-A- 19 853 127
- DE-A- 19 853 360
- DE-A- 19 931 009
- US-A- 4 138 849
- US-A- 5 884 482
- US-A- 6 076 353
- PATENT ABSTRACTS OF JAPAN vol. 013, no. 469 (M-883), 24. Oktober 1989 (1989-10-24) -& JP 01 182533 A (HINO MOTORS LTD), 20. Juli 1989 (1989-07-20)
- PATENT ABSTRACTS OF JAPAN vol. 008, no. 191 (M-322), 4. September 1984 (1984-09-04) -& JP 59 082526 A (HINO MOTORS LTD), 12. Mai 1984 (1984-05-12)

## Beschreibung

Die Erfindung betrifft eine Motorbremseinrichtung für eine turboaufgeladene Brennkraftmaschine gemäß dem Oberbegriff des Anspruchs 1, ein Verfahren gemäß dem Oberbegriff des Anspruchs 18 zum Betreiben der Motorbremseinrichtung sowie eine Brennkraftmaschine mit einer solchen Motorbremseinrichtung.

Auf dem Gebiet von turboaufgeladenen Brennkraftmaschinen ist es bekannt, dass zusätzlich zu der Motorbremse der Brennkraftmaschine auch der Turbolader mit einer eigenen Hilfsbremseinrichtung versehen ist. In einer typischen Betriebsweise sorgt eine solche Hilfsbremseinrichtung immer dann für ein Umwandeln des Turboladers von einer Leistungs- bzw. Antriebseinrichtung zu einer Bremseinrichtung, wenn ein Hilfsbremsvorgang erforderlich ist. Dies erfolgt im Allgemeinen durch Modifizieren der Auspuff- und/oder Ansaugzeitsteuerung des Turboladers in einer solchen Weise, dass eine Bewegung der Zylinderkolben von einem möglichst geringen Leistungsverlust zu einem möglichst großen Leistungsverlust umgewandelt wird und zwar dann, wenn das Abbremsen des Turboladers erfolgt. Eine solche Leistungsabsorption wendet das Prinzip eines Luftkompressors an, d.h. die Zylinderkolben üben auf die in den Zylindern des Motors eingeschlossene Luft Arbeit aus, wenn ein Bremsen erforderlich ist.

Es existieren hier zwei grundsätzlich unterschiedliche Konzepte, unter Zuhilfenahme eines Turboladers eine Hilfsbremseinrichtung für eine Brennkraftmaschine zu realisieren:

Gemäß eines ersten Konzepts wird versucht, durch Verringerung des abgasseitigen effektiven Querschnittes den Druck in der Abgasleitung zu erhöhen, um so gewissermaßen einen Gegendruck zu erzielen, der auf das Gas im Zylindervolumen der Brennkraftmaschine übertragen wird. Aufgrund des höheren Drucks im Zylinderinnenraum müssen die Zylinderkolben eine größere Arbeit verrichten, was letztendlich zu einem Bremsen führt. Dies wird in der Praxis verschiedenartig umgesetzt:

In der DE 195 43 190 A1 ist eine Hilfsbremseinrichtung für eine aufgeladene Brennkraftmaschine beschrieben, die mit einer Abgasturbine mit einer über ein verstellbares Leitgitter variabel einstellbaren Turbinengeometrie versehen ist. Das Leitgitter umfasst Leitschaufeln, die mit Hilfe eines Stellglieds so eingestellt werden können, dass der effektive, d.h. wirksame Turbinenquerschnitt der Turbine verändert wird. Hierdurch können je nach Betriebszustand der Brennkraftmaschine verschieden hohe Abgasgegendrücke in einem Abschnitt zwischen den Zylindern und dem Turbolader realisiert werden, wodurch die Leistung der Turbine und die Leistung des Verdichters bedarfsgemäß eingestellt werden kann.

Um im Bremsbetrieb der Brennkraftmaschine eine Motorbremswirkung zu erzielen, wird dieses Leitgitter in eine Staustellung derart gebracht, dass der wirksame Turbinenquerschnitt deutlich reduziert ist. In einem Leitungsabschnitt zwischen den Zylindern und der Turbine baut sich so ein hoher Abgasgegendruck mit der Folge auf, dass Abgas mit hoher Geschwindigkeit durch die Kanäle zwischen den Leitschaufeln der Turbine strömt und das Turbinenrad mit einem hohen Impuls beaufschlagt. Die Turbinenleistung wird auf den Verdichter übertragen, worauf die dem Motor zugeführte Ladeluft vom Verdichter unter erhöhten Ladedruck gesetzt wird. Dadurch wird der Zylinder ladeluftseitig mit erhöhtem Ladedruck beaufschlagt, abgasseitig liegt zwischen dem Zylinderauslass und dem Turbolader ein erhöhter Abgasgegendruck an, der einem Ablassen der im Zylinder verdichteten Luft über geöffnete Bremsventile in den Abgasstrang hinein entgegenwirkt. Im Motorbremsbetrieb muss der Kolben Kompressionsarbeit gegen den hohen Überdruck in der Abgasleitung verrichten, wodurch je nach Stellung der Leitgitter eine mehr oder weniger starke Bremswirkung erreicht wird.

Zusätzlich oder alternativ zu diesen mit Leitgittern versehenen Turbinen kann auch eine Klappe vorgesehen sein, die in der Abgasleitung stromabwärts der Turbine angeordnet ist. Diese Klappe kann in einem Bremsbetrieb der Motorbremseinrichtung quer oder weitestgehend quer in der Abgasleitung geschwenkt sein und vermindert so den wirksamen Querschnitt in der Abgasleitung, wodurch sich stromaufwärts in Richtung der Zylinderauslässe der Druck in der Abgasleitung erhöht und somit eine Bremswirkung erzielt wird. Ein Turbolader mit einer solchen Klappe ist z. B. in der DE 40 24 572 beschrieben.

Gemäß eines zweiten Konzepts kann zur Anhebung der Motorbremsleistung eine Abgasrückführung vorgesehen werden, die im Motorbremsbetrieb aktiviert wird. Dabei wird Abgas aus der Abgasleitung, die während eines Motorbremsbetriebes üblicherweise unverbrannte Verbrennungsluft aufweist und die durch die Kompression in den Zylindern ein erhöhtes Temperaturniveau aufweist, wieder den Zylindern der Brennkraftmaschine zugeführt.

In der DE 198 53 127 A1 ist eine derartige Motorbremseinrichtung mit Abgasrückführung beschrieben. Dort wird das Abgas vor dem Turbolader abgezweigt und stromauf in Richtung der Zylindereinlässe mit der im Verdichter des Turboladers verdichteten Verbrennungsluft des Ansaugtraktes vermischt und den Zylindern zugeführt. In der Leitung für die Abgasrückführung ist ein Rückschlagventil vorgesehen. Dieses Rückschlagventil ist hier auch erforderlich, um Druckdifferenzen zwischen der abgasseitigen und der ladeluftseitigen Leitung auszugleichen.

Ein Verfahren zum Betreiben einer Motorbremseinrichtung für eine turboaufgeladene Brennkraftmaschine ist überdies aus der DE 199 31 009 A1 bekannt.

Alle vorgenannten Hilfsbremseinrichtungen einer turboaufgeladenen Brennkraftmaschine sind jedoch nur für sogenannte einstufige Turbolader ausgelegt. Moderne Turbolader können jedoch eine zweistufige Aufladung aufweisen.

Eine Brennkraftmaschine mit einem solchen zweistufig ausgebildeten Aufladesystem ist beispielsweise in den Deutschen Offenlegungsschriften DE 198 37 978 A1 und DE 195 14 572 A1 beschrieben. Bei solchen zweistufig aufgeladenen Brennkraftmaschinen weist die Turboladergruppe jeweils eine in Reihe zueinander angeordnet Hochdruckstufe und Niederdruckstufe auf. Das Abgas aus dem Motor durchströmt hier zunächst die Hochdruckturbine und anschließend die Niederdruckturbine. In gleicher Weise wird die zum Aufladen der Zylinder vorgesehene Ladeluft zunächst von einem Niederdruckverdichter und anschließend von einem Hochdruckverdichter verdichtet und gegebenenfalls nach einer Abkühlung der Ladeluft in einem Wärmetauscher der Ladeluftseite der Brennkraftmaschine zugeführt. In einem typischen Betriebsmodus wird der Turbolader bei unteren Drehzahlbereichen der Brennkraftmaschine zweistufig betrieben. Bei steigender Drehzahl kann auf einstufige Verdichtung ausschließlich des Niederdruckverdichters umgeschaltet werden, indem zum Beispiel mittels abgasseitigen Bypassleitungen die Hochdruckturbine vollständig oder zumindest teilweise überbrückt wird. Sinnvollerweise wird in diesem Fall auch der Hochdruckverdichter über einen ladeluftseitig vorgesehenen Rohrschalter vollständig umgangen.

Eine weitere Brennkraftmaschine gemäß Anspruch 1, erster Teil, mit zweistufigem Aufladesystem ist aus der JP 01 182533 A bekannt.

Bei solchen zweistufigen Turboladern sind die jeweils in Reihe angeordneten Turbinen und Verdichter für unterschiedliche Ladedrücke ausgelegt. Dies hat in der Praxis die Folge, dass oft ein sehr großer konstruktiver Aufwand zur Realisierung der oben genannten Hilfsbremseinrichtung erforderlich ist. Um beispielsweise jeweils einen optimalen Hilfsbremsmodus für die unterschiedlichen Betriebsmodi des zweistufigen Turboladers zu erhalten, sind eine Vielzahl von Rohrschaltern unerlässlich, um jeweils die gewünschten Drücke in den Abgasleitungen und Ladeluftleitungen zu erzielen. Solche Bremseinrichtungen sind daher sehr teuer in der Herstellung, wobei der Mehraufwand keine Verbesserung der Bremsqualität zur Folge hat. Insbesondere bei sehr kleine Turboladern, die vor allem bei Brennkraftmaschinen mit geringem Hubraum zum Einsatz kommen, ist eine solche Hilfsbremseinrichtung bislang nicht in befriedigender Weise gelöst worden.

Der vorliegenden Erfindung liegt daher die Aufgabe zugrunde, eine verbesserte Bremseinrichtung eines zweistufigen Turboladers einer Brennkraftmaschine bereitzustellen.

Erfindungsgemäß wird diese Aufgabe durch eine Bremseinrichtung mit den Merkmalen des Patentanspruchs 1 gelöst. Ferner wird diese Aufgabe durch ein Verfahren zum Betreiben der Bremseinrichtung mit den Merkmalen des Patentanspruchs 18 sowie eine Brennkraftmaschine mit den Merkmalen des Patentanspruchs 24 gelöst.

Vorteilhafte Ausgestaltungen und Weiterbildungen der Erfindung sind jeweils den Unteransprüchen sowie der Beschreibung unter Bezugnahme auf die Zeichnung entnehmbar.

Die Erfindung wird nachfolgend anhand der in den Figuren der Zeichnung angegebenen Ausführungsbeispiele näher erläutert.
Es zeigt dabei:
- Figur 1: in schematischer Darstellung eine zweistufig aufgeladenen Brennkraftmaschine mit Regelventil in der Abgassammelleitung;
- Figur 2: ein Ausführungsbeispiel einer erfindungsgemäßen, zweistufig aufgeladenen Brennkraftmaschine mit angebauter Abgasrückführleitung;
- Figur 3: eine zweistufig aufgeladene Brennkraftmaschine entsprechend Figur 1 mit variabler Turbinengeometrie;
- Figur 4: eine zweistufig aufgeladene Brennkraftmaschine entsprechend Figur 1 mit einer als Zwillingsstromturbine ausgebildeten Hochdruckturbine;
- Figur 5: eine zweistufig aufgeladene Brennkraftmaschine entsprechend Figur 1, bei der der Verschlusskörper zwischen der Hochdruckstufe und Niederdruckstufe angeordnet ist;
- Figur 6: in einer schematischen Darstellung ein besonders bevorzugtes Ausführungsbeispiel einer erfindungsgemäßen zweistufig aufgeladenen Brennkraftmaschine.

In allen Figuren der Zeichnung sind gleiche bzw. funktionsgleiche Elemente - sofern nichts anderes angegeben ist - mit gleichen Bezugszeichen versehen worden. In allen Figuren der Zeichnung wurde ferner die Richtung des Abgasstromes sowie des Ladeluftstromes jeweils durch Pfeile in den entsprechenden Leitungen bezeichnet.

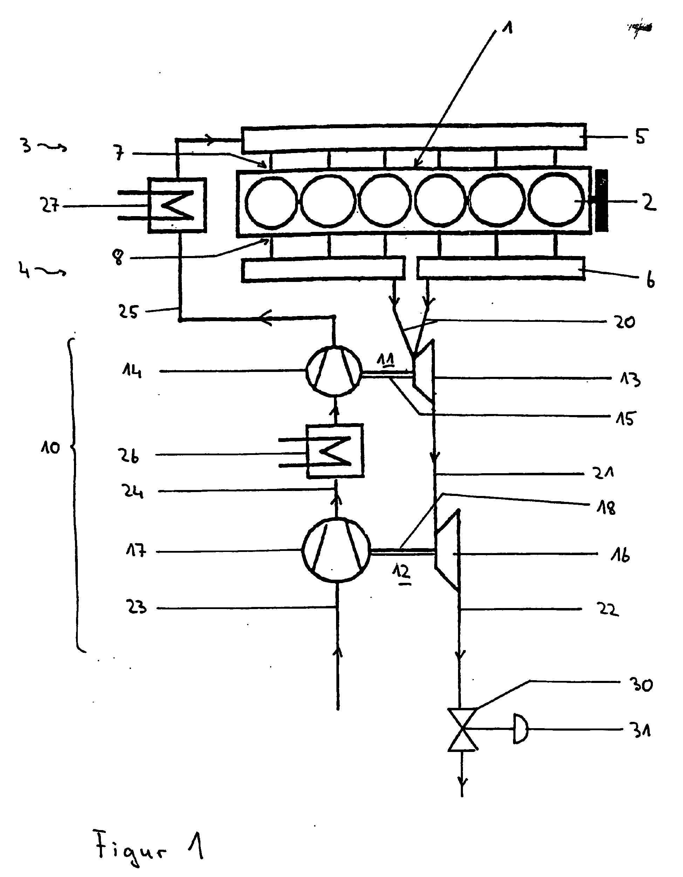

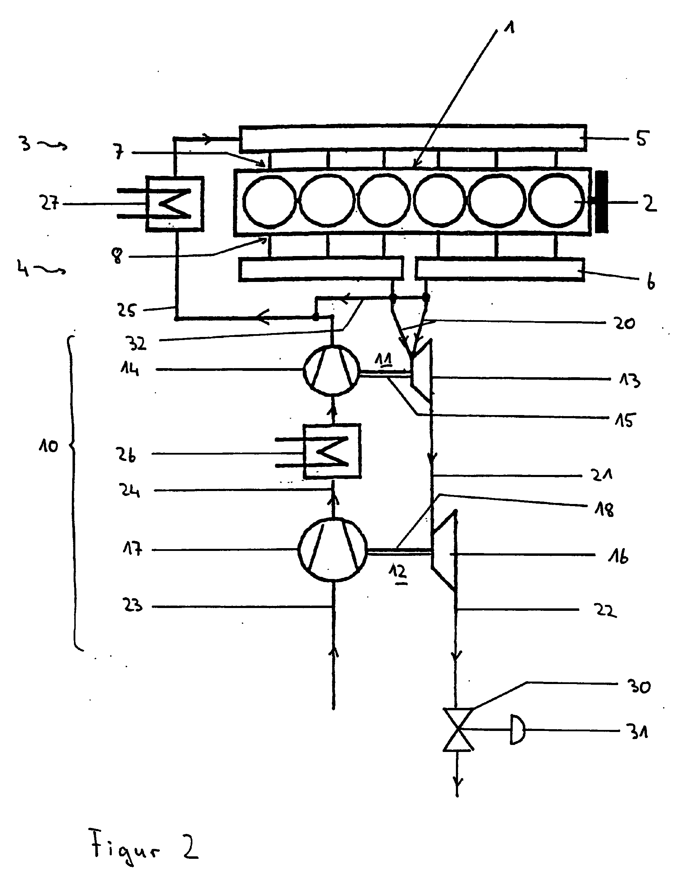

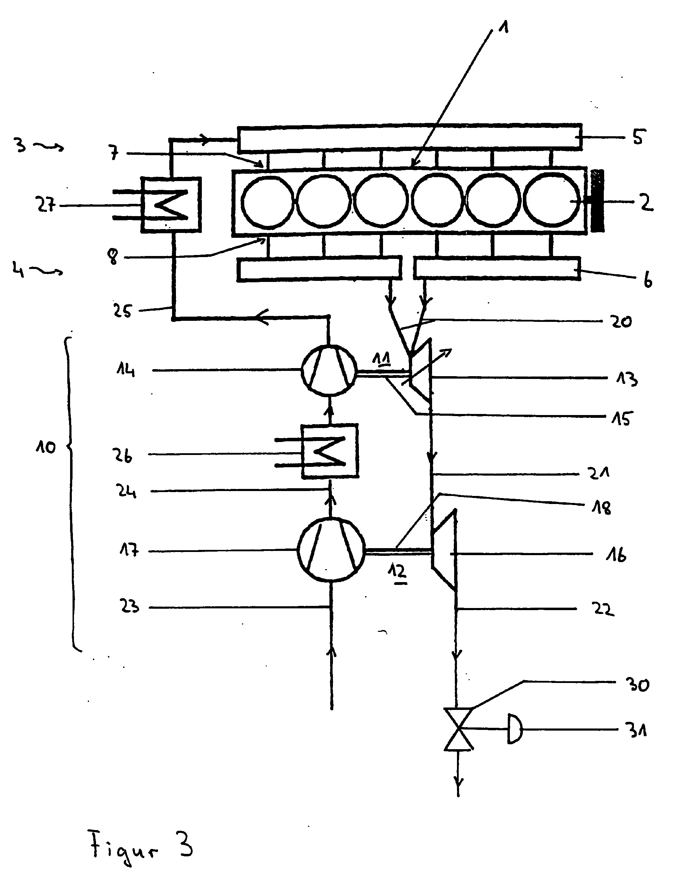

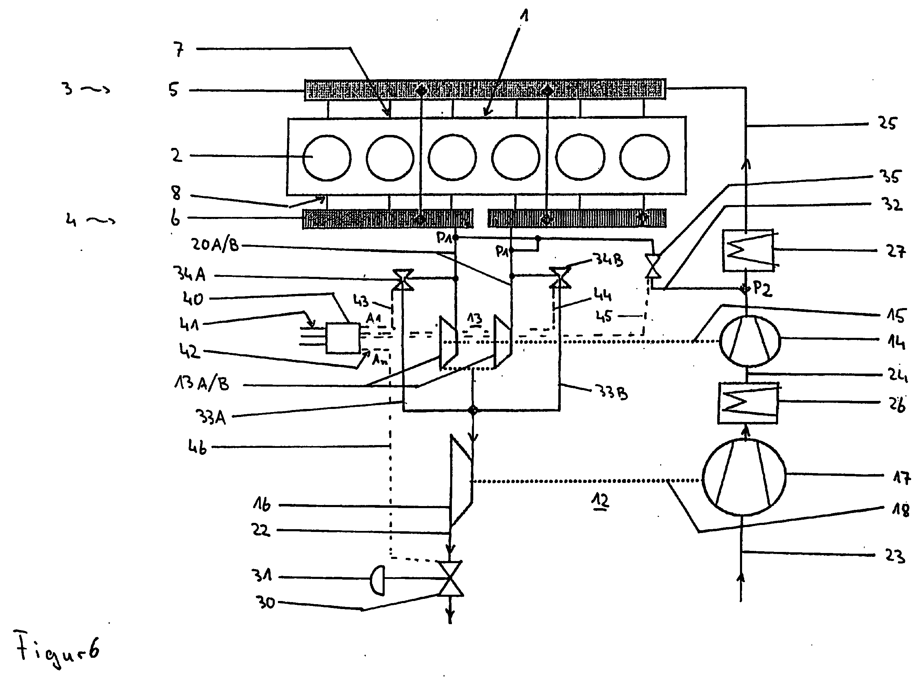

Während Fig. 1 das Prinzip einer zweistufigen Brennkraftmaschine illustriert, zeigen die Figuren 2 und 6 Ausführungsbeispiele der Erfindung. Die Figuren 3 bis 5 illustrieren schematisch Ausgestaltungsvarianten von Brennkraftmaschinen, die in vorteilhafter Weise in die in den Figuren 2 und 6 gezeigten Ausführungsbeispiele der Erfindung integriert werden können. Zusammen mit diesen bilden sie Weiterbildungen der Erfindung.

Figur 1 zeigt in einer schematischen Darstellung das Prinzip einer Bremseinrichtung.

In Figur 1 ist mit Bezugszeichen 1 eine Brennkraftmaschine bezeichnet. Die Brennkraftmaschine 1 ist als sechszylindrige Dieselbrennkraftmaschine in Reihenbauweise ausgebildet und weist somit sechs in Reihe zueinander angeordnete Zylinder 2 auf. Die Brennkraftmaschine 1 weist eine Frischluftseite 3 und eine Abgasseite 4 auf, wobei die Einlässe 7 auf der Frischluftseite 3 mit einer Ladeluftsammelleitung 5 und die Auslässe 8 der Brennkraftmaschine 1 auf der Abgasseite 4 mit zwei Abgassammelleitungen 6 verbunden sind.

Die Brennkraftmaschine 1 wird über einen mit Bezugszeichen 10 bezeichneten Turbolader aufgeladen. Der Turbolader 10 ist beispielhaft zweistufig ausgebildet. Ein solcher zweistufiger Turbolader 10 weist eine Hochdruckstufe 11 und eine Niederdruckstufe 12 auf. Die Hochdruckstufe 11 besteht aus einer Hochdruckturbine 13 und einem Hochdruckverdichter 14, die über eine gemeinsame Welle 15 miteinander starr gekoppelt sind. Die Niederdruckstufe 12 besteht entsprechend aus einer Niederdruckturbine 16 und einem Niederdruckverdichter 17, die ebenfalls über eine gemeinsame Welle 18 miteinander gekoppelt sind. Die Hochdruckstufe 11 ist der Niederdruckstufe 12 vorgeschaltet.

Der Turbinenlaufraddurchmesser der Niederdruckturbine 16 ist beispielhaft größer als der der Hochdruckturbine 13 ausgebildet, wobei das Laufraddurchmesserverhältnis zwischen Niederdruck- und Hochdruckturbine typischerweise, jedoch nicht notwendigerweise, im Bereich 1,2 - 1,8 liegt. In gleicher Weise weist das Verdichterrad des Hochdruckverdichters 14 einen geringeren Durchmesser als das Verdichterrad des Niederdruckverdichters 17 auf.

Die Abgassammelleitung 6 ist stromaufwärts mit Abgasleitungen 20, 21, 22 verbunden, über die das Abgas aus den Zylindern 2 der Brennkraftmaschine 1 abgeleitet werden kann. In gleicher Weise sind Ladeluftleitungen 23, 24, 25 vorgesehen, die stromaufwärts mit der Ladeluftsammelleitung 5 verbunden sind. Über die Ladeluftleitungen 23, 24, 25 und die Verdichter 14, 17 ist den Zylindern 2 der Brennkraftmaschine 1 Ladeluft zuführbar.

Die beiden Turbinen 13, 16 sind zueinander in Reihe geschaltet angeordnet, wobei die Hochdruckturbine 13 mit der Niederdruckturbine 16 über die Abgasleitung 21 verbunden ist und der Niederdruckturbine 16 in Strömungsrichtung des Abgases vorgeschaltet angeordnet ist. In gleicher Weise sind der Niederdruckverdichter 17 und der Hochdruckverdichter 14 in Reihe zueinander angeordnet und über eine Ladeluftleitung 24 miteinander verbunden, wobei der Niederdruckverdichter 17 in Strömungsrichtung der Ladeluft dem Hochdruckverdichter 14 vorgeschaltet angeordnet ist.

Ferner ist ein erster Ladeluftkühler 26 vorgesehen, der in der Ladeluftleitung 24 zwischen den beiden Verdichtern 14, 17 angeordnet ist. Ein zweiter Ladeluftkühler 27 ist in der La deluftleitung 25 zwischen Hochdruckverdichter 14 und Einlässen 7 der Brennkraftmaschine 1 angeordnet. Im Bedarfsfall kann auf eine oder im Extremfall auch auf beide Ladeluftkühler 26, 27 verzichtet werden.

Eine veränderliche Verschlussvorrichtung 30 ist vorgesehen, die hier als regel- oder steuerbares Ventil ausgebildet ist. Die Verschlussvorrichtung 30 kann aber auch als Bremsklappe, Drosselklappe, Schieber oder dergleichen ausgebildet sein. Über ein mit dem Regelventil 30 verbundenes Stellglied 31 ist das Ventil 30 einstellbar. Die Verschlussvorrichtung 30 kann über eine in Figur 1 nicht dargestellte Regel- oder Steuereinrichtung regelbar oder steuerbar ausgebildet sein. Die Funktion einer solchen Regeleinrichtung bzw. Steuereinrichtung wird nachfolgend anhand von Figur 6 noch detailliert beschrieben.

Im Unterschied zu Figur 1 weist die Anordnung Gemäß Figur 2 erfindungsgemäß eine Abgasrückführleitung 32 auf. Die Abgasrückführleitung 32 zweigt von den Abgasleitungen 20, die aus den Abgassammelleitungen 6 kommen, ab und zweigt in die Ladeluftleitung 25, die den Hochdruckverdichter 14 mit der Ladeluftsammelleitung 5 verbindet, ein. Der besondere Vorteil der in Figur 2 dargestellten Anordnung besteht darin, dass aufgrund der Druckverhältnisse in den Abgasleitungen 6, 20 sowie den Ladeluftleitungen 5, 25 keinerlei Rückschlagventil vorgesehen ist und darüber hinaus, wie nachfolgend noch erläutert wird, auch nicht erforderlich ist.

Im Unterschied zu der Anordnung in Figur 1 weist die turboaufgeladene Brennkraftmaschine 1 Gemäß Figur 3 einen Turbolader 10 auf, der eine Hochdruckturbine 13 mit variabler Turbinengeometrie (VTG) aufweist. Die Funktionalität einer variablen Turbinengeometrie ist in allen Figuren mit einem Pfeil angedeutet.

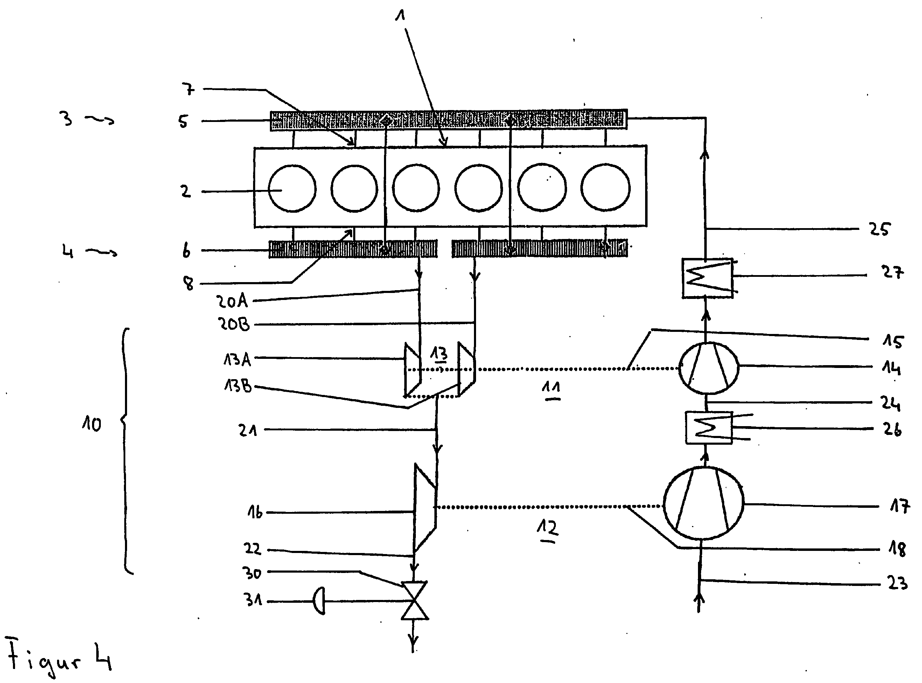

Im Unterschied zu der Anordnung in Figur 1 weist die turboaufgeladene Brennkraftmaschine Gemäß Figur 4 eine als Zwillingsstromturbine ausgebildete Hochdruckturbine 13 auf. Diese Zwillingsstromhochdruckturbine 13 besteht aus zwei parallel zueinander angeordneten Turbinenräder 13A, 13B, die miteinander - typischerweise starr - gekoppelt sind. Typischerweise, jedoch nicht notwendigerweise, weisen diese beiden Turbineräder 13A, 13B den gleichen Durchflussquerschnitt der Turbinenkanäle auf.

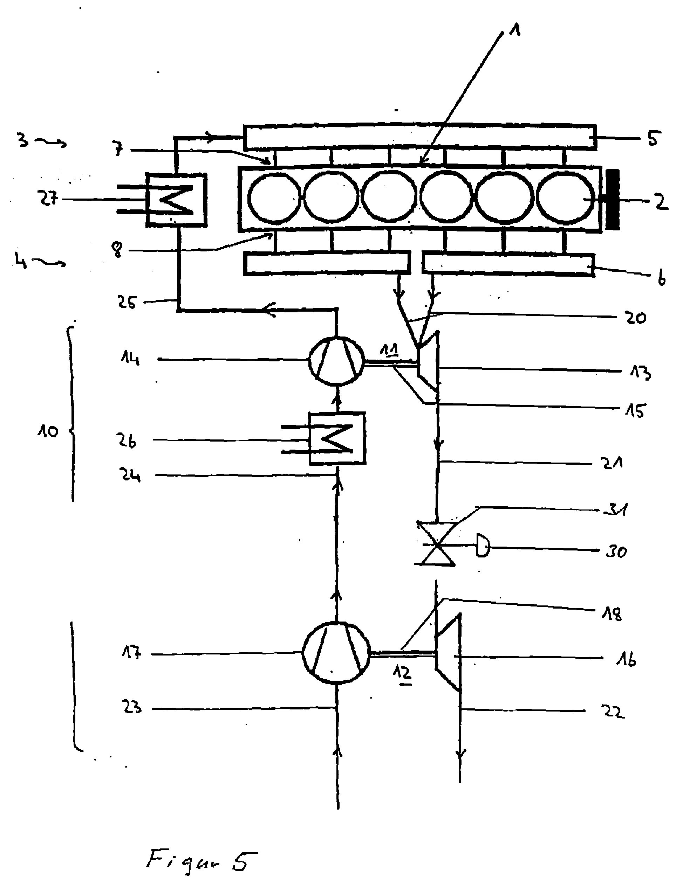

Im Unterschied zu der Anordnung in Figur 1 ist bei der Brennkraftmaschine gemäß Figur 5 die Verschlussvorrichtung 30 zwischen der Hochdruckstufe und Niederdruckstufe 11, 12 angeordnet. Da die Bremsklappe 30 hier direkt auf die Hochdruckstufe wirkt, zeichnet sich dieses Anordnung gegenüber der Anordnung in Figur 1 dadurch aus, dass eine höhere Genauigkeit und Schnelligkeit der Regelung der Hochdruckstufe 11 möglich ist.

Zur optimalen Anpassung des zweistufigen Turboladers 10 an die Betriebszustände der Brennkraftmaschine 1 ist je Kanal 13A, 13B der zweiflutigen Zwillingsstromdruckturbine 13 eine Bypassleitung in vorteilhafterweise symmetrischer Schaltung vorgesehen. Diese zweigen jeweils von den als Abgaskrümmer ausgeführten, separaten Rohrleitungen 20A, 20B ab, umgehen die Zwillingsstromturbine 13 und münden zur gleichen Beaufschlagung der einflutigen Niederdruckturbine 16 in die gemeinsame Leitung 21 ein. Jede Bypassleitung 33A, 33B ist mit einem stromabwärts der Abzweigung angeordneten Rohrschalter 34A, 34B, der beispielsweise als Regelventil ausgebildet sein kann, versehen. Diese Rohrschalter 34A, 34B sind vorteilhafterweise im Abgaskrümmer oder im Gehäuse der Hochdruckturbine 13 mitintegriert und können als Schieber, Ventil, Klappe, Drossel oder dergleichen ausgeführt sein und z.B. über eine programmgesteuerte Einheit, beispielsweise eine CPU, sowohl einzeln oder auch gemeinsam angesteuert werden.

Vorteilhafterweise, jedoch nicht notwendigerweise, werden die Turbinenräder 13A, 13B der Zwillingsstromhochdruckturbine 13 synchron betrieben.

Figur 6 zeigt in einer schematischen Darstellung eines besonders bevorzugten Ausführungsbeispiels einer erfindungsgemäßen zweistufig aufgeladenen Brennkraftmaschine. Die bevorzugte Anordnung in Figur 6 besteht im Wesentlichen aus einer Kombination der unterschiedlichen Ausgestaltungen einer Brennkraftmaschine 1 entsprechend den Figuren 1 - 4. Die Brennkraftmaschine 1 ist hier mit einem Regelventil 30, einer Abgasrückführleitung 32, Bypassleitungen 33A, 33B mit darin vorgesehenen Rohrschaltern 34A, 34B ausgestattet. Zusätzlich weist die Hochdruckstufe 11 eine Zwillingsstromhochdruckturbine 13 auf, bei der die Hochdruckturbinen 13A, 13B jeweils eine variable Turbinengeometrie aufweisen.

An dieser Stelle sei anzumerken, dass die Niederdruckturbine 12 selbstverständlich auch als Zwillingsstromturbine ausgebildet sein kann. Darüber hinaus kann zusätzlich oder alternativ die Niederdruckturbine 12 auch eine variable Turbinengeometrie aufweisen.

Figur 6 zeigt zusätzlich eine Steuereinrichtung 40 auf. Die Steuereinrichtung 40 weist Dateneingänge 41 und Datenausgänge 42 auf. Über die Dateneingänge 41 sind beispielsweise analoge Messgrössen, z.B. die Temperatur oder der Druck des Abgases oder der Ladeluft, die Umdrehungszahl des Motors, etc., oder digitale Daten einkoppelbar. Abhängig von diesen Daten und von einem vorgegebenen Programm der Steuereinrichtung 40 erzeugt diese Steuersignale, die an den Ausgängen 42 der Steuereinrichtung 40 abgreifbar sind.

Die Datenausgänge 42 sind über eine Vielzahl von Steuerleitungen 43 - 46 mit den Regelventilen 34A, 34B, mit der Zwillingsstromdruckturbine 13, mit der Niederdruckturbine 12 sowie mit dem Stellglied 31 des Regelventils 30 verbunden.

Ferner ist eine Drossel 35 vorgesehen, die in die Abgasrückführleitung 32 geschaltet angeordnet ist. Diese wird typischerweise ebenfalls über die Steuereinrichtung 40 eingestellt oder aktiviert ist.

Zusätzlich kann noch eine weitere, in Figur 6 nicht dargestellte Abgasrückführung vorgesehen sein, bei der eine Teilmenge des rückgeführten Abgases einem beliebig anderen Punkt der Ladeluftseite zugeführt wird. Typischerweise, jedoch nicht notwendigerweise, wird bis etwa 50 % des Abgases der Brennkraftmaschine 10 der Ladeluftseite 3 zurückgeführt.

Die Betriebsweise einer turboaufgeladenen Brennkraftmaschine 1 ist allgemein bekannt und beispielsweise in den eingangs genannten Druckschriften ausführlich beschrieben, so dass nachfolgend darauf nur sehr kurz eingegangen wird:

Die sechszylindrige Dieselbrennkraftmaschine 1 wird über einen Turbolader 10 zweistufig aufgeladen. Dazu ist eine zweiflutige Hochdruckstufe 11 einer einflutigen Niederdruckstufe 12 vorgeschaltet. Über die von den Zwillingsstrom 13A, 13B und der Niederdruckturbine 16 angetriebenen Verdichter 14 bzw. 17 wird Ladeluft verdichtet, in den beiden Ladeluftkühlern 26, 27 abgekühlt, zu einem bestimmten Anteil (≥ 0) mit Abgas aus der Abgasrückführleitung 32 vermischt und der Ladeluftseite 3 der Brennkraftmaschine 1 zugeführt.

Zur Steuerung der Rohrschalter 30, 33A, 33B, der Verschlusskörper sowie der in ihrer Geometrie variabel einstellbaren Turbinen 13, 16 in Abhängigkeit von Betriebskenngrößen A1 - An sind diese an eine elektronische Motorsteuerung 40, beispielsweise eine CPU, angeschlossen, die für eine betriebsoptimale Aufteilung des Abgasmassenstromes sorgt. Durch die mögliche Einstellung unterschiedlicher Bypassraten, Durchflussraten und Turbinenstellungen erhält man vorteilhafterweise einen zusätzlichen Freiheitsgrad zur Aufteilung der gesamten Abgasmenge, der für den Hilfsbremsbetrieb des Turboladers 10 von besonderer Bedeutung ist.

Nachfolgend wird die Funktionsweise eines als Hilfsbremseinrichtung betriebenen erfindungsgemäßen Turboladers 10 anhand der Figur 6 näher erläutert:

Bei geschlossenen Bypassventilen 34A, 34B und einer regelbaren Auspuffbremsklappe 30 ist eine erhöhte Motorbremsleistung darstellbar, die durch einen erhöhten Abgasdruck verursacht durch die kleine Hochdruckstufe 11 möglich wird. Bei Verwendung von unterschiedlich großen Kanälen 13A, 13B der Hochdruckzwillingsturbine 13 und bei getrennter Regelung der jeweiligen Bypassventile 34A, 34B kann der entsprechende Drehzahlbereich im Bremsbetrieb optimal angepasst werden. Die unterschiedlichen Kanaldurchmesser der beiden Hochdruckturbinen 13A, 13B lassen sich aufgrund deren variabler Turbinengeometrie durch geeignete Ansteuerung der Motorsteuerung 40 gezielt einstellen. Dadurch lässt sich eine differenzielle Aufteilung des Abgasmassenstromes auf Hochdruck- und Niederdruckstufe 11, 12 aufteilen.

Dieser Abgasmassenstrom lässt sich somit wie folgt beeinflussen:
1. Bei geeigneter Einstellung des Regelventils 30 lässt sich der wirksame Querschnitt der Abgasleitung 22 gezielt einstellen.
2. Die Hochdruckturbinen 13A, 13B und vorteilhafterweise auch die Niederdruckturbine 16 weisen eine variable Turbinengeometrie auf. Bei geeigneter Ansteuerung kann der wirksame Kanalquerschnitt der jeweiligen Turbinen mehr oder weniger groß gewählt werden.
3. Über die Bypassventile 34A, 34B lässt sich einstellen, welcher Anteil des Abgases die Hochdruckturbinen 13A, 13B durchströmt und welcher Anteil die Hochdruckturbinen 13A, 13B überbrückt.

Durch die genannten Maßnahmen, d.h. durch geeignete Steuerung und/oder Regelung der eben genannten Elemente, lässt sich definiert ein abgasseitiger Druck P1 in den Abgasleitungen 6, 20 und damit auch in den Zylindern 2 einstellen. In einer besonders vorteilhaften Ausgestaltung, insbesondere bei Vorhandensein einer Abgasrückführleitung 32 entsprechend Figur 6, kann damit sichergestellt werden, dass der abgasseitige Druck P1 in den Abgasleitungen 20 stets größer ist als der ladeluftseitige Druck P2 in der Ladeluftleitung 25. Da damit stets ein Druckgefälle zwischen dem abgasseitigen und ladeluftseitigen Bereich der Abgasrückführleitung 32 besteht, ist hier vorteilhafterweise kein Rücksperrventil in der Abgasrückführleitung 32 erforderlich.

In einer weiteren vorteilhaften Ausgestaltung, kann sichergestellt werden, dass der abgasseitige Druck P1 stets konstant bleibt.

Zusätzlich wird durch eine unterschiedliche Größe der Kanäle 13A, 13B der Zwillingsstromturbine 13 mit getrennter Regelung der Bypassventile 34A, 34B eine optimierte Dosierung der rückgeführten Abgasmenge (EGR-Menge) an den jeweils gewünschten Betriebszustand ermöglicht. Ein zusätzliches EGR-Ventil, wie dies beispielsweise in dem eingangs genannten Stand der Technik zwingend erforderlich ist, ist hier nicht notwendig.

In Figur 6 ist dennoch eine Drossel 35 in der Abgasrückführleitung 32 angeordnet, über die der Abgasmassenstrom über die Abgasrückführleitung 32 bei geeigneter Steuerung zusätzlich dosiert werden kann. Dadurch lassen sich die Motoreigenschaften gezielt beeinflussen, indem beispielsweise die Motorbetriebswerte hinsichtlich der Schadstoffemission (N_{OX}, CO, CO₂) und hinsichtlich des Kraftstoffverbrauchs weitestgehend optimal eingestellt werden können. Der besondere Vorteil dieser erfindungsgemäßen Abgasrückführung besteht darin, dass der Abgasstrom bereits allein durch das Druckgefälle zwischen Abgasseite und Ladeluftseite gewährleistet wird. Daher ist es vollständig ausreichend, lediglich eine Durchflussdrossel in der Abgasrückführleitung 32 vorzusehen, wobei auf diese - wie bereits erwähnt - ohne nennenswerte Beeinträchtigung der Funktion der Hilfsbremseinrichtung auch verzichtet werden kann.

Selbstverständlich sei die Erfindung nicht ausschließlich auf zweistufig ausgebildete Turbolader beschränkt, sondern lässt sich vielmehr auch auf drei- oder mehrstufige Turbolader erweitern.

Die zwei Turboladerstufen sind im vorliegenden Ausführungsbeispiel vorteilhafterweise Bestandteil eines einzigen Turboladers und sind somit in einem Gehäuse dieses Turboladers integriert. Jedoch ist diese vorteilhafte Integration zweier Turboladerstufen in einem Turbolader nicht zwingend erforderlich, sondern es ließe sich dieselbe Funktion auch durch zwei getrennte, nacheinander geschaltete Turbolader erreichen, wenngleich diese Anordnung montagetechnisch und aufgrund der höheren Kosten weniger bevorzugt ist.

Schließlich sei die Erfindung nicht ausschließlich auf Diesel-Brennkraftmaschinen in Sechszylinder-Reihenbauweise beschränkt, sondern lässt sich auf beliebige Brennkraftmaschinen mit einer beliebigen Anzahl von wie auch immer angeordneten Zylindern erweitern.

In den Darstellungen der Figuren 1 bis 6, insbesondere den Ausführungsbeispielender Figuren 2 und 6 weist die Niederdruckstufe einen gegenüber der Hochdruckstufe größeren Durchmesser der entsprechenden Turbinenräder auf. Jedoch ist dies nicht zwingend erforderlich, sondern es ist auch denkbar, dass die beiden Turbinenstufen einen gleichen Turbinenraddurchmesser aufweisen bzw. die Hochdruckstufe den größeren Raddurchmesser aufweist.

Vorstehend wurde jeweils eine Steuerung der Verschlusskörper (Ventile, Klappen, Rohrschalter, etc.) sowie der Turbinengeometrie durch die Motorsteuerung beschrieben. Selbstverständlich lassen sich einige oder alle diese Elemente auch anderweitig steuern oder durch eine eigens vorgesehene Regeleinrichtung an den gewünschten Betriebszustand anpassen. Die Einstellung der Verschlusskörper bzw. der Turbinengeometrie kann elektrisch, pneumatisch, hydraulisch oder mechanisch erfolgen.

Zusammenfassend kann festgestellt werden, dass durch den wie beschrieben ausgestalteten zweistufigen Turbolader in völliger Abkehr von bisher bekannten Lösungen ein gezielt einstellbarer, abgasseitiger Druck, insbesondere ein konstanter Druck, auf sehr einfache Weise einstellbar ist, ohne dass eine konstruktiv aufwendige, teure Lösung Gemäß dem Stand der Technik in Kauf genommen werden muss.

### Bezugszeichenliste

- 1: Brennkraftmaschine
- 2: Zylinder
- 3: Ladeluftseite
- 4: Abgasseite
- 5: Ladeluftsammelleitung
- 6: Abgassammelleitung
- 7: Einlässe
- 8: Auslässe

- 10: Turbolader
- 11: Hochdruckstufe
- 12: Niederdruckstufe
- 13: Hochdruckturbine
- 13A, 13B: Turbinenräder der Zwillingsstromhochdruckturbine, Kanal
- 14: Hochdruckverdichter
- 15: Welle
- 16: Niederdruckturbine
- 17: Niederdruckverdichter
- 18: Welle

- 20, 20A, 20B: Abgasleitungen
- 21, 22: Abgasleitungen
- 23, 24, 25: Ladeluftleitungen
- 26, 27: Ladeluftkühler

- 30: Ventil
- 31: Stellglied
- 32: Abgasrückführleitung
- 33A, 33B: Bypassleitungen
- 34A, 34B: Bypassventile, Rohrschalter
- 35: Durchflussdrossel

- 40: Steuereinrichtung, Motorsteuerung
- 41: Dateneingänge
- 42: Datenausgänge
- 43 - 46: Steuerleitungen

- P1: abgasseitiger Druck
- P2: ladeluftseitiger Druck

## Patentansprüche

1. Motorbremseinrichtung für eine turboaufgeladenen Brennkraftmaschine (1),
mit einem zumindest zweistufig ausgebildeten Aufladesystem (10), das mindestens eine Hochdruckstufe (11) sowie mindestens eine der Hochdruckstufe (11) abgasseitig nachgeschalteten und ladeluftseitig vorgeschalteten Niederdruckstufe (12) aufweist,
mit mindestens einer mit Auslasskanälen (8) der Brennkraftmaschine (1) verbundenen und abgasseitig der Brennkraftmaschine (1) nachgeschaltet angeordneten Abgasleitung (20, 20A, 20B, 21, 22),
mit mindestens einem ersten Verschlusskörper (30), der in einem abgasseitig der Hochdruckstufe (11) nachgeschalteten Bereich der Abgasleitung (22) angeordnet ist, wobei der erste Verschlusskörper (30) derart ausgebildet ist, dass der Abgasdurchfluss und dadurch bedingt ein Druck (P1) in der Abgasleitung (20, 20A, 20B, 21, 22) so veränderbar ist, dass dadurch die Motorbremsleistung bedarfsgemäß variabel einstellbar ist,
**dadurch gekennzeichnet,**
**dass** eine Abgasrückführungseinrichtung (32, 35) vorgesehen ist, die zumindest eine Abgasrückführleitung (32) aufweist, mittels der eine Teilmenge des Abgases von einer Abgasleitung (20, 20A, 20B) vor einer Turbine (13, 13A, 13B) der Hochdruckstufe (11) einer Ladeluftleitung (25) hinter einem Verdichter (14) der Hochdruckstufe (11) zuführbar ist.

2. Motorbremseinrichtung nach Anspruch 1,
**dadurch gekennzeichnet,**
**dass** der Verschlusskörper (30) steuerbar oder regelbar ausgebildet ist.

3. Motorbremseinrichtung nach einem der vorstehenden Ansprüche,
**dadurch gekennzeichnet,**
**dass** der erste Verschlusskörper (30) als Regelventil (30) oder als Auspuffbremsklappe oder als Auspuffdrosselklappe ausgebildet ist.

4. Motorbremseinrichtung nach einem der vorstehenden Ansprüche,
**dadurch gekennzeichnet,**
**dass** mindestens ein erster Verschlusskörper (30) in einem abgasseitig der Niederdruckstufe (12) nachgeschalteten Bereich der Abgasleitung (22) angeordnet ist.

5. Motorbremseinrichtung nach einem der vorangegangenen Ansprüche,
**dadurch gekennzeichnet,**
**dass** in der Abgasrückführleitung (32) kein Rückschlagventil vorgesehen ist und dass ein erster Druck (P1) in der Abgasleitung (20, 20A, 20B) vor der Turbine (13, 13A, 13B) stets grösser ist als ein zweiter Druck (P2) in der Ladeluftleitung (25) hinter dem Verdichter (14).

6. Motorbremseinrichtung nach einem der vorangegangenen Ansprüche,
**dadurch gekennzeichnet,**
**dass** eine Durchflussdrossel (35) vorgesehen ist, die in der Abgasrückführleitung (32) angeordnet ist und über die festgelegt ist, welche Teilmenge des Abgases über die Abgasrückführleitung (32) in die Ladeluftleitung (25) rückgeführt wird.

7. Motorbremseinrichtung nach einem der vorstehenden Ansprüche,
**dadurch gekennzeichnet,**
**dass** der Turbolader (10) folgende Elemente aufweist:
- die Hochdruckstufe (11) enthält mindestens eine abgasseitig angeordnete Hochdruckturbine (13, 13A, 13B) und mindestens einen ladeluftseitig angeordneten Hochdruckverdichter (14), die über eine erste, zwischen verdichter (14), die über eine erste, zwischen diesen angeordnete gemeinsame Welle (15) miteinander gekoppelt sind;
- die Niederdruckstufe (12) enthält mindestens eine abgasseitig angeordnete Niederdruckturbine (16) und mindestens einen ladeluftseitig angeordneten Niederdruckverdichter (17), die über eine zweite, zwischen diesen angeordnete gemeinsame Welle (18) miteinander gekoppelt sind;
- mindestens ein Ladeluftkühler (26, 27) ist vorgesehen, der ladeluftseitig zwischen einem Verdichter (14, 17) und einem Ladelufteinlass (7) der Brennkraftmaschine (1) angeordnet ist.

8. Motorbremseinrichtung nach einem der vorstehenden Ansprüche,
**dadurch gekennzeichnet,**
**dass** mindestens eine der Turbinen (13, 16) als Turbine mit variabler Turbinengeometrie ausgebildet ist.

9. Motorbremseinrichtung nach einem der vorstehenden Ansprüche,
**dadurch gekennzeichnet,**
**dass** mindestens eine Turbine (13, 13A, 13B) des Turboladers (10) als Zwillingsstromturbine (13A, 13B) ausgebildet ist, bei der zwei Turbinenräder (13A, 13B) parallel geschaltet angeordnet sind.

10. Motorbremseinrichtung nach Anspruch 9,
**dadurch gekennzeichnet,**
**dass** die beiden Turbinenräder (13A, 13B) der Zwillingsstromturbine (13A, 13B) einen Abgaskanal mit unterschiedlichem Durchflussquerschnitt aufweisen.

11. Motorbremseinrichtung nach einem der vorstehenden Ansprüche,
**dadurch gekennzeichnet,**
**dass** jeder Hochdruckturbine (13, 13A, 13B) jeweils eine Bypassleitung (33A, 33B) mit einem jeweils darin angeordneten zweiten Verschlusskörper (34A, 34B) parallel geschaltet angeordnet ist.

12. Motorbremseinrichtung nach einem der Ansprüche 9 - 11,
**dadurch gekennzeichnet,**
**dass** die jeweils in Bypassleitung (33A, 33B) der Zwillingsstromturbine (13) angeordneten zweiten Verschlusskörper (34A, 34B) unabhängig voneinander steuerbar oder regelbar ausgebildet sind.

13. Motorbremseinrichtung nach einem der vorstehenden Ansprüche,
**dadurch gekennzeichnet,**
**dass** zumindest ein Verschlusskörper (30, 34A, 34B) als Ventil und/oder Drossel und/oder Klappe und/oder Schieber ausgebildet ist

14. Motorbremseinrichtung nach einem der vorstehenden Ansprüche,
**dadurch gekennzeichnet,**
**dass** eine Steuereinrichtung (40) vorgesehen ist, die ein Steuer- oder Regelsignal bereitstellt, über welches der erste Verschlusskörper (30) und/oder die zweiten Verschlusskörper (34A, 34B) und/oder die Durchflussdrossel (35) und/oder die Turbinen (13, 16) mit variabler Turbinengeometrie steuerbar oder regelbar sind.

15. Motorbremseinrichtung nach Anspruch 14,
**dadurch gekennzeichnet,**
**dass** die Steuereinrichtung (40) Bestandteil der Motorsteuerung, die eine programmgesteuerte Einheit, insbesondere einen Mikroprozessor oder Mikrokontroller, aufweist, ist.

16. Motorbremseinrichtung nach einem der vorstehenden Ansprüche,
**dadurch gekennzeichnet,**
**dass** das Steuer- oder Regelsignal ein elektrisches oder pneumatisches oder hydraulisches Signal ist.

17. Motorbremseinrichtung nach einem der vorstehenden Ansprüche,
**dadurch gekennzeichnet,**
**dass** zumindest einer der Verschlusskörper (30, 34A, 34B) oder die Durchflussdrossel (35) in einem Gehäuse des Turboladers (10) mitintegriert ist.

18. Verfahren zum Betreiben einer Motorbremseinrichtung nach einem der Ansprüche 1 bis 17, bei welchem mittels einer Steuereinrichtung (40) ein erster Druck (P1) in einer vor einer Hochdruckturbine (13) der Hochdruckstufe (11) angeordneten Abgasleitung (20, 20A, 20B) in Abhängigkeit von einem Bremsmodus auf einen vorgegebenen Wert eingestellt wird,
**dadurch gekennzeichnet, dass** Abgas über die Abgasrückführeinrichtung (32, 35) der Ladeluftleitung (25) zugeführt wird und die Einstellung des ersten Drucks (P1) in der Abgasleitung (22) und/oder eines zweiten Drucks (P2) in der Ladeluftleitung (25) hinter dem Verdichter (14) der Hochdruckstufe (11) durch Beeinflussung des Durchflussquerschnitts der hinter einer Niederdruckturbine (16) der Niederdruckstufe (12) angeordneten Abgasleitung (22) eingestellt wird, indem der Verschlusskörper (30) je nach gewünschtem Durchflussquerschnitt mehr oder weniger stark geöffnet wird.

19. Verfahren nach Anspruch 18,
**dadurch gekennzeichnet,**
**dass** der erste Druck (P1) im Bremsbetrieb so eingestellt wird, dass er stets größer ist als ein zweiter Druck (P2) in der nach dem Hochdruckverdichter (14) angeordneten Ladeluftleitung (25).

20. Verfahren nach einem der Ansprüche 18 oder 19,
**dadurch gekennzeichnet,**
**dass** der erste Druck (P1) und/oder der zweite Druck (P2) so eingestellt werden, dass sie in dem Bremsbetrieb des Turboladers (10) stets konstant sind.

21. Verfahren nach einem der Ansprüche 18 - 20,
**dadurch gekennzeichnet,**
**dass** die Einstellung des ersten Drucks (P1) und/oder des zweiten Drucks (P2) durch Beeinflussung des Durchflussquerschnitts eines Kanals mindestens einer Turbine (13, 13A, 13B, 16) eingestellt wird, indem die Turbinenkanäle je nach gewünschtem Durchflussquerschnitt mehr oder weniger stark geöffnet werden.

22. Verfahren nach einem der Ansprüche 18 - 21,
**dadurch gekennzeichnet,**
**dass** die Einstellung des ersten Drucks (P1) und/oder des zweiten Drucks (P2) durch Beeinflussung des Durchflussquerschnitts mindestens weiteren Verschlusskörpers (34A, 34B) eingestellt wird, indem der zweite Verschlusskörper (34A, 34B) je nach gewünschtem Durchflussquerschnitt mehr oder weniger stark geöffnet wird.

23. Brennkraftmaschine (1)
mit einem Motorblock, der mindestens einen Zylinder (2) aufweist und der mindestens einen Ladelufteinlass (7) und mindestens einen Abgasauslass (8) aufweist,
mit einem als Bremseinrichtung nach einem der Ansprüche 1 - 17 ausgebildet Aufladesystem (10).

24. Brennkraftmaschine nach Anspruch 23,
**dadurch gekennzeichnet,**
**dass** das Aufladesystem (16) als Turbolader (10) ausgebildet ist.

25. Brennkraftmaschine nach einem der Ansprüche 23 oder 24,
**dadurch gekennzeichnet,**
**dass** die Brennkraftmaschine (1) als Otto-Motor oder als Dieselmotor ausgebildet ist.

26. Brennkraftmaschine nach einem der Ansprüche 23 - 25,
**dadurch gekennzeichnet,**
**dass** mindestens ein ersten Katalysator vorgesehen ist, der abgasseitig dem Turbolader (10) in Reihe nachgeschaltet ist.

## Claims

1. Engine braking device for a turbocharged internal combustion engine (1),
having a supercharging system (10) which is of at least two-stage design and has at least one high-pressure stage (11) and at least one low-pressure stage (12) which is connected downstream of the high-pressure stage (11) at the exhaust-gas side and is connected upstream of the high-pressure stage (11) at the charge-air side,
having at least one exhaust line (20, 20A, 20B, 21, 22) which is connected to outlet ducts (8) of the internal combustion engine (1) and is arranged downstream of the internal combustion engine (1) at the exhaust-gas side,
having at least one first closure body (30) which is arranged in a region of the exhaust line (22) which is arranged downstream of the high-pressure stage (11) at the exhaust-gas side, with the first closure body (30) being designed such that the exhaust-gas throughflow, and as a result a pressure (P1) in the exhaust line (20, 20A, 20B, 21, 22), can be varied in such a way that the engine braking power can be variably adjusted on demand in this way,
**characterized**
**in that** an exhaust-gas recirculation device (32, 35) is provided which has at least one exhaust-gas recirculation line (32), by means of which a partial quantity of the exhaust gas can be supplied from an exhaust line (20, 20A, 20B) upstream of a turbine (13, 13A, 13B) of the high-pressure stage (11) to a charge-air line (25) downstream of a compressor (14) of the high-pressure stage (11).

2. Engine braking device according to Claim 1,
**characterized**
**in that** the closure body (30) is formed so as to be controllable or regulable.

3. Engine braking device according to one of the preceding claims,
**characterized**
**in that** the first closure body (30) is embodied as a regulating valve (30) or as an exhaust brake flap or as an exhaust throttle flap.

4. Engine braking device according to one of the preceding claims,
**characterized**
**in that** at least one first closure body (30) is arranged in a region of the exhaust line (22) which is connected downstream of the low-pressure stage (12) at the exhaust-gas side.

5. Engine braking device according to one of the preceding claims,
**characterized**
**in that** no non-return valve is provided in the exhaust-gas recirculation line (32), and in that a first pressure (P1) in the exhaust line (20, 20A, 20B) upstream of the turbine (13, 13A, 13B) is always greater than a second pressure (P2) in the charge-air line (25) downstream of the compressor (14).

6. Engine braking device according to one of the preceding claims,
**characterized**
**in that** a throughflow throttle (35) is provided which is arranged in the exhaust-gas recirculation line (32) and which serves to define what partial quantity of the exhaust gas is recirculated via the exhaust-gas recirculation line (32) into the charge-air line (25).

7. Engine braking device according to one of the preceding claims,
**characterized**
**in that** the turbocharger (10) has the following elements:
- the high-pressure stage (11) contains at least one high-pressure turbine (13, 13A, 13B) which is arranged at the exhaust-gas side and at least one high-pressure compressor (14) which is arranged at the charge-air side, which high-pressure turbine (13, 13A, 13B) and high-pressure compressor (14) are coupled to one another by means of a first common shaft (15) which is arranged between them;
- the low-pressure stage (12) contains at least one low-pressure turbine (16) which is arranged at the exhaust-gas side and at least one low-pressure compressor (17) which is arranged at the charge-air side, which low-pressure turbine (16) and low-pressure compressor (17) are coupled to one another by means of a second common shaft (18) which is arranged between them;
- at least one charge-air cooler (26, 27) is provided which is arranged at the charge-air side between a compressor (14, 17) and a charge-air inlet (7) of the internal combustion engine (1).

8. Engine braking device according to one of the preceding claims,
**characterized**
**in that** at least one of the turbines (13, 16) is embodied as a turbine with variable turbine geometry.

9. Engine braking device according to one of the preceding claims,
**characterized**
**in that** at least one turbine (13, 13A, 13B) of the turbocharger (10) is embodied as a twin-flow turbine (13A, 13B) in which two turbine wheels (13A, 13B) are arranged in parallel.

10. Engine braking device according to Claim 9,
**characterized**
**in that** the two turbine wheels (13A, 13B) of the twin-flow turbine (13A, 13B) have an exhaust-gas duct with different throughflow cross section.

11. Engine braking device according to one of the preceding claims,
**characterized**
**in that** in each case one bypass line (33A, 33B) with a second closure body (34A, 34B) arranged therein in each case is arranged parallel to each high-pressure turbine (13, 13A, 13B).

12. Engine braking device according to one of Claims 9 - 11,
**characterized**
**in that** the second closure bodies (34A, 34B) which are arranged in each case in bypass line (33A, 33B) of the twin-flow turbine (13) are designed so as to be controllable or regulable independently of one another.

13. Engine braking device according to one of the preceding claims,
**characterized**
**in that** at least one closure body (30, 34A, 34B) is embodied as a valve and/or throttle and/or flap and/or slide.

14. Engine braking device according to one of the preceding claims,
**characterized**
**in that** a control device (40) is provided which provides a control or regulating signal by means of which the first closure body (30) and/or the second closure bodies (34A, 34B) and/or the throughflow throttle (35) and/or the turbines (13, 16) with variable turbine geometry can be controlled or regulated.

15. Engine braking device according to Claim 14,
**characterized**
**in that** the control device (40) is a constituent part of the engine controller which has a program-controlled unit, in particular a microprocessor or microcontroller.

16. Engine braking device according to one of the preceding claims,
**characterized**
**in that** the control or regulating signal is an electrical or pneumatic or hydraulic signal.

17. Engine braking device according to one of the preceding claims,
**characterized**
**in that** at least one of the closure bodies (30, 34A, 34B) or the throughflow throttle (35) is co-integrated in a housing of the turbocharger (10).

18. Method for operating an engine braking device according to one of Claims 1 to 17, in which method a first pressure (P1) in an exhaust line (20, 20A, 20B) arranged upstream of a high-pressure turbine (13) of the high-pressure stage (11) is adjusted, by means of a control device (40), to a predefined value as a function of a braking mode,
**characterized in that** exhaust gas is supplied via the exhaust-gas recirculation device (32, 35) to the charge-air line (25), and the adjustment of the first pressure (P1) in the exhaust line (22) and/or of a second pressure (P2) in the charge-air line (25) downstream of the compressor (14) of the high-pressure stage (11) is adjusted by influencing the throughflow cross section of the exhaust line (22) which is arranged downstream of a low-pressure turbine (16) of the low-pressure stage (12), by virtue of the closure body (30) being opened to a greater or lesser extent depending on the desired throughflow cross section.

19. Method according to Claim 18,
**characterized**
**in that** the first pressure (P1) is adjusted in the braking mode in such a way that it is always greater than a second pressure (P2) in the charge-air line (25) which is arranged downstream of the high-pressure compressor (14).

20. Method according to one of Claims 18 or 19,
**characterized**
**in that** the first pressure (P1) and/or the second pressure (P2) are adjusted in such a way that they are always constant in the braking mode of the turbocharger (10).

21. Method according to one of Claims 18 - 20,
**characterized**
**in that** the adjustment of the first pressure (P1) and/or of the second pressure (P2) is adjusted by influencing the throughflow cross section of a duct of at least one turbine (13, 13A, 13B, 16), by virtue of the turbine ducts being opened to a greater or lesser extent depending on the desired throughflow cross section.

22. Method according to one of Claims 18 - 21,
**characterized**
**in that** the adjustment of the first pressure (P1) and/or of the second pressure (P2) is adjusted by influencing the throughflow cross section of at least one further closure body (34A, 34B), by virtue of the second closure body (34A, 34B) being opened to a greater or lesser extent depending on the desired throughflow cross section.

23. Internal combustion engine (1)
having an engine block which has at least one cylinder (2) and which has at least one air inlet (7) and at least one exhaust-gas outlet (8),
having a supercharging system (10) designed as a braking device according to one of Claims 1 - 17.

24. Internal combustion engine according to Claim 23,
**characterized**
**in that** the supercharging system (16) is embodied as a turbocharger (10).

25. Internal combustion engine according to one of Claims 23 or 24,
**characterized**
**in that** the internal combustion engine is embodied as a spark-ignition engine or as a diesel engine.

26. Internal combustion engine according to one of Claims 23 - 25,
**characterized**
**in that** at least one first catalytic converter is provided which is connected downstream of the turbocharger (10) in series at the exhaust-gas side.

## Revendications

1. Dispositif de frein moteur pour un moteur à combustion interne (1) turbocompressé,
avec un système de suralimentation (10) réalisé à au moins deux étages, qui présente au moins un étage à haute pression (11) ainsi qu'au moins un étage à basse pression (12) monté en aval de l'étage à haute pression (11) du côté des gaz d'échappement et en amont du côté de l'air de suralimentation,
avec au moins une conduite d'échappement (20, 20A, 20B, 21, 22) reliée aux canaux d'évacuation (8) du moteur à combustion interne (1) et disposée en aval du moteur à combustion interne (1) du côté des gaz d'échappement,
avec au moins un premier obturateur (30) qui est disposé dans une région de la conduite d'échappement (22) montée en aval de l'étage à haute pression (11) du côté des gaz d'échappement, le premier obturateur (30) étant conçu de telle sorte que le flux de gaz d'échappement, et par suite une pression (P1) dans la conduite d'échappement (20, 20A, 20B, 21, 22), peut être modifié(e) de telle sorte que la puissance du frein moteur peut être ainsi réglée de manière variable en fonction des besoins,
**caractérisé en qu'**il est prévu un dispositif (32, 35) de recyclage des gaz d'échappement qui présente au moins une conduite (32) de recyclage des gaz d'échappement au moyen de laquelle une quantité partielle des gaz d'échappement peut être amenée, d'une conduite d'échappement (20, 20A, 20B) située en amont d'une turbine (13, 13A, 13B) de l'étage à haute pression (11), à une conduite (25) d'air de suralimentation située en aval d'un compresseur (14) de l'étage à haute pression (11).

2. Dispositif de frein moteur selon la revendication 1, **caractérisé en ce que** l'obturateur (30) peut être commandé ou réglé.

3. Dispositif de frein moteur selon l'une quelconque des revendications précédentes, **caractérisé en ce que** le premier obturateur (30) est conçu comme soupape de régulation (30) ou comme clapet de frein d'échappement ou comme clapet d'étranglement d'échappement.

4. Dispositif de frein moteur selon l'une quelconque des revendications précédentes, **caractérisé en ce qu'**au moins un premier obturateur (30) est disposé dans une région de la conduite d'échappement (22) montée en aval de l'étage à basse pression (12) du côté des gaz d'échappement.

5. Dispositif de frein moteur selon l'une quelconque des revendications précédentes, **caractérisé en ce qu'**il n'est pas prévu de clapet anti-retour dans la conduite (32) de recyclage des gaz d'échappement, et **en ce qu'**une première pression (P1) dans la conduite d'échappement (20, 20A, 20B) en amont de la turbine (13, 13A, 13B) est toujours supérieure à une deuxième pression (P2) dans la conduite (25) d'air de suralimentation en aval du compresseur (14).

6. Dispositif de frein moteur selon l'une quelconque des revendications précédentes, **caractérisé en ce qu'**il est prévu un étranglement d'écoulement (35) qui est disposé dans la conduite (32) de recyclage des gaz d'échappement et au moyen duquel est définie la quantité partielle de gaz d'échappement qui sera ramenée dans la conduite (25) d'air de suralimentation via la conduite (32) de recyclage des gaz d'échappement.

7. Dispositif de frein moteur selon l'une quelconque des revendications précédentes, **caractérisé en ce que** le turbocompresseur (10) présente les éléments suivants :
- l'étage à haute pression (11) comporte au moins une turbine à haute pression (13, 13A, 13B) disposée du côté des gaz d'échappement et au moins un compresseur à haute pression (14) disposé du côté de l'air de suralimentation, qui sont couplés entre eux via un premier arbre commun (15) disposé entre eux ;
- l'étage à basse pression (12) comporte au moins une turbine à basse pression (16) disposée du côté des gaz d'échappement et au moins un compresseur à basse pression (17) disposé du côté de l'air de suralimentation, qui sont couplés entre eux via un deuxième arbre commun (18) disposé entre eux ;
- il est prévu au moins un refroidisseur (26, 27) d'air de suralimentation, qui est disposé du côté de l'air de suralimentation entre un compresseur (14, 17) et une admission (7) d'air de suralimentation du moteur à combustion interne (1).

8. Dispositif de frein moteur selon l'une quelconque des revendications précédentes, **caractérisé en ce qu'**au moins une des turbines (13, 16) est conçue comme turbine à géométrie variable.

9. Dispositif de frein moteur selon l'une quelconque des revendications précédentes, **caractérisé en ce qu'**au moins une turbine (13, 13A, 13B) du turbocompresseur (10) est conçue comme turbine à double flux (13A, 13B), où deux roues de turbine (13A, 13B) sont disposées en étant montées en parallèle.

10. Dispositif de frein moteur selon la revendication 9, **caractérisé en ce que** les deux roues de turbine (13A, 13B) de la turbine à double flux (13A, 13B) présentent un canal d'échappement de section d'écoulement différente.

11. Dispositif de frein moteur selon l'une quelconque des revendications précédentes, **caractérisé en ce qu'**une conduite de dérivation respective (33A, 33B), avec un deuxième obturateur respectif (34A, 34B) disposé dans cette conduite, est montée en parallèle avec chaque turbine à haute pression (13, 13A, 13B).

12. Dispositif de frein moteur selon l'une quelconque des revendications 9 à 11, **caractérisé en ce que** les deuxièmes obturateurs (34A, 34B) respectivement disposés dans la conduite de dérivation (33A, 33B) de la conduite à double flux (13) peuvent être commandés ou réglés indépendamment entre eux.

13. Dispositif de frein moteur selon l'une quelconque des revendications précédentes, **caractérisé en ce qu'**au moins un obturateur (30, 34A, 34B) est réalisé sous forme de soupape et/ou d'étranglement et/ou de clapet et/ou de tiroir.

14. Dispositif de frein moteur selon l'une quelconque des revendications précédentes, **caractérisé en ce qu'**il est prévu un dispositif de commande (40) qui fournit un signal de commande ou de réglage par l'intermédiaire duquel le premier obturateur (30) et/ou les deuxièmes obturateurs (34A, 34B) et/ou l'étranglement d'écoulement (35) et/ou les turbines (13, 16) à géométrie variable peuvent être commandés ou réglés.

15. Dispositif de frein moteur selon la revendication 14, **caractérisé en ce que** le dispositif de commande (40) fait partie de la gestion moteur qui présente une unité programmée par programme, notamment un microprocesseur ou microcontrôleur.

16. Dispositif de frein moteur selon l'une quelconque des revendications précédentes, **caractérisé en ce que** le signal de commande ou de réglage est un signal électrique ou pneumatique ou hydraulique.

17. Dispositif de frein moteur selon l'une quelconque des revendications précédentes, **caractérisé en ce qu'**au moins un des obturateurs (30, 34A, 34B) ou l'étranglement d'écoulement (35) est conjointement intégré dans un carter du turbocompresseur (10).

18. Procédé d'exploitation d'un dispositif de frein moteur selon l'une quelconque des revendications 1 à 17, selon lequel, au moyen d'un dispositif de commande (40), une première pression (P1) dans une conduite d'échappement (20, 20A, 20B) disposée en amont d'une turbine à haute pression (13) de l'étage à haute pression (11) est réglée à une valeur prédéfinie en fonction d'un mode de freinage,
**caractérisé en ce que** des gaz d'échappement sont apportés via le dispositif (32, 35) de recyclage des gaz d'échappement à la conduite (25) d'air de suralimentation, et le réglage de la première pression (P1) dans la conduite d'échappement (22) et/ou d'une deuxième pression (P2) dans la conduite (25) d'air de suralimentation en aval du compresseur (14) de l'étage à haute pression (11) s'effectue en agissant sur la section d'écoulement de la conduite d'échappement (22) disposée en aval d'une turbine à basse pression (16) de l'étage à basse pression (12), par le fait que l'obturateur (30) est plus ou moins ouvert selon la section d'écoulement souhaitée.

19. Procédé selon la revendication 18, **caractérisé en ce que** la première pression (P1) est réglée, en service de freinage, de telle sorte qu'elle est toujours supérieure à une deuxième pression (P2) dans la conduite (25) d'air de suralimentation disposée en aval du compresseur à haute pression (14).

20. Procédé selon la revendication 18 ou 19, **caractérisé en ce que** la première pression (P1) et/ou la deuxième pression (P2) sont réglées de telle sorte qu'elles sont toujours constantes pendant le service de freinage du turbocompresseur (10).

21. Procédé selon l'une quelconque des revendications 18 à 20, **caractérisé en ce que** le réglage de la première pression (P1) et/ou de la deuxième pression (P2) s'effectue en agissant sur la section d'écoulement d'un canal d'au moins une turbine (13, 13A, 13B, 16), par le fait que les canaux de turbines sont plus ou moins ouverts selon la section d'écoulement souhaitée.

22. Procédé selon l'une quelconque des revendications 18 à 21, **caractérisé en ce que** le réglage de la première pression (P1) et/ou de la deuxième pression (P2) s'effectue en agissant sur la section d'écoulement au moins d'obturateurs supplémentaires (34A, 34B), par le fait que le deuxième obturateur (34A, 34B) est plus ou moins ouvert selon la section d'écoulement souhaitée.

23. Moteur à combustion interne (1),
avec un bloc-moteur qui présente au moins un cylindre (2) et qui présente au moins une admission (7) d'air de suralimentation et au moins une évacuation (8) de gaz d'échappement,
avec un système de suralimentation (10) conçu comme dispositif de frein moteur selon l'une quelconque des revendications 1 à 17.

24. Moteur à combustion interne selon la revendication 23, **caractérisé en ce que** le système de suralimentation (10) est réalisé sous forme de turbocompresseur (10).

25. Moteur à combustion interne selon la revendication 23 ou 24, **caractérisé en ce que** le moteur à combustion interne (1) est réalisé sous forme de moteur à essence ou de moteur diesel.

26. Moteur à combustion interne selon l'une quelconque des revendications 23 à 25, **caractérisé en ce qu'**il est prévu au moins un premier catalyseur qui est monté du côté des gaz d'échappement en aval du turbocompresseur (10) et en série avec lui.
